# FASCICULE DE BREVET EUROPEEN

(11) **EP 2 740 133 B1**
(45) Date de publication et mention de la délivrance du brevet: **05.09.2018**
(21) Numéro de dépôt: 12743176.5
(22) Date de dépôt: 03.08.2012
(51) Int. Cl.: H01G 9/035, B01J 31/02, C07F 9/54, H01G 11/58, H01G 9/022, H01G 9/00

(54) **LIQUIDES IONIQUES UTILISABLES POUR ENTRER DANS LA COMPOSITION D'ELECTROLYTE POUR DISPOSITIFS A STOCKAGE D'ENERGIE**
IONISCHE FLÜSSIGKEIT FÜR ENERGIESPEICHERVORRICHTUNGELEKTROLYTEN
IONIC LIQUIDS USABLE FOR ELECTROLYTE COMPOSITION IN ENERGY STORAGE DEVICE

(30) Priorité: 04.08.2011 FR 1157159
(43) Date de publication de la demande: 11.06.2014
(73) Titulaire: Commissariat à l'Énergie Atomique et aux Énergies Alternatives, 75015 Paris (FR); Université François Rabelais, 37041 Tours (FR)
(72) Inventeur: GALIANO, Hervé, F-37700 La Ville-Aux-Dames (FR); ANOUTI, Mérièm, F-37550 Saint Avertin (FR); LEMORDANT, Daniel, F-37270 Veretz (FR); TIMPERMAN, Laure, F-37550 Saint Avertin (FR)
(74) Mandataire: Ahner, Philippe
(86) Numéro de dépôt international: PCT/EP2012/065269
(87) Numéro de publication internationale: WO 2013/017693

(56) Documents cités:
- EP-A2- 0 246 825
- WO-A1-2010/142437
- BE-A- 397 146
- US-A- 4 889 779
- US-A1- 2004 141 281
- US-A1- 2007 022 541
- NEOUZE ET AL: "Versatile heat resistant solid electrolytes with performances of liquid electrolytes", PROGRESS IN SOLID STATE CHEMISTRY, PERGAMON PRESS, OXFORD, GB, vol. 33, no. 2-4, 1 janvier 2005 (2005-01-01), pages 217-222, XP005428554, ISSN: 0079-6786, DOI: 10.1016/J.PROGSOLIDSTCHEM.2005.11.049

## Description

### DOMAINE TECHNIQUE

La présente invention a trait à de nouveaux liquides ioniques résultant de l'association originale entre un cation spécifique et un anion spécifique.

Ces liquides ioniques présentent d'excellentes propriétés en termes de conductivité, de viscosité, de domaine d'électroactivité et de stabilité thermique.

Ainsi, c'est tout naturellement que ces liquides ioniques peuvent trouver application comme électrolytes dans des dispositifs à stockage d'énergie, tels que des supercondensateurs.

### ÉTAT DE LA TECHNIQUE ANTÉRIEURE

Il existe trois grands types de dispositifs à stockage d'énergie permettant de stocker réversiblement l'énergie électrique : les condensateurs diélectriques classiques comme décrit dans EP 0 246 825, US 2004/141281 et, plus anciennement, BE 397 146, les accumulateurs ou générateurs électrochimiques secondaires et les supercondensateurs.

Les supercondensateurs présentent un intérêt tout particulier tant pour le domaine de l'énergie embarquée que de celui de l'énergie portable.

D'un point de vue du fonctionnement, les supercondensateurs fonctionnent sur le principe de la double couche électrochimique d'où l'appellation anglo-saxonne parfois rencontrée de « Electrochemical double layer capacitor » (connue également sous l'abréviation EDLC), soit en d'autres termes sur le principe de stockage d'énergie par distribution des ions provenant d'un électrolyte au voisinage de la surface de deux électrodes poreuses imprégnées d'électrolyte, séparées par une membrane isolante et poreuse assurant la conduction ionique.

Ainsi, une cellule de base d'un supercondensateur peut se résumer aux éléments suivants :
- une électrode positive ;
- une interface électrode positive/électrolyte formant une double couche électrique ;
- une membrane isolante et poreuse imprégnée par ledit électrolyte ;
- une électrode négative ; et
- une interface électrode négative/électrolyte formant une double couche électrique.

Du fait de l'existence de ces deux interfaces formant chacune une double couche électrochimique, un supercondensateur peut être considéré schématiquement comme l'association en série de deux condensateurs, l'un à l'électrode positive et l'autre à l'électrode négative, ces deux condensateurs étant créés par application d'un courant aux bornes du supercondensateur, ce qui crée une zone de charges aux deux interfaces électrode-électrolyte, l'énergie étant ainsi stockée de façon électrostatique et non électrochimique.

Il existe trois grands types de supercondensateurs :
- les supercondensateurs à base de carbone, qui associent classiquement deux électrodes à base de carbone activé, connus également sous l'appellation de « supercondensateurs à double couche électrochimique » et sont également qualifiés très souvent de systèmes symétriques, du fait que les électrodes positives et négatives sont identiques ;
- les supercondensateurs à base d'oxydes métalliques, fonctionnant sur le principe du stockage d'énergie par l'intermédiaire d'une réaction de protonation à la surface d'électrodes oxydes de métaux nobles (par exemple, en RuO₂ et IrO₂), ce type de supercondensateurs restant dévolu à des marchés à haute valeur ajoutée, du fait des coûts induits par l'utilisation de métaux nobles ;
- les supercondensateurs, qui associent une électrode de batterie à une électrode de supercondensateur, ce qui vaut à ces supercondensateurs l'appellation de « système hybride » ou encore l'appellation de « systèmes hybrides asymétriques », du fait qu'ils comprennent deux électrodes différentes.

Il est connu que l'énergie stockée et la puissance délivrée par un supercondensateur sont fonction du carré de la tension nominale applicable, ce qui signifie, en d'autres termes, que les performances d'un supercondensateur peuvent être grandement améliorées en jouant sur l'augmentation de la tension nominale applicable aux bornes du supercondensateur.

Ainsi, la différence de potentiel maximale aux bornes du supercondensateur est conditionnée par la nature de l'électrolyte et son aptitude à rester stable dans une fenêtre électrochimique donnée. Entre autres, il s'avère également nécessaire, qu'un électrolyte tout en étant stable sur une large fenêtre électrochimique présente les caractéristiques suivantes :
- une bonne conductivité ionique ;
- une plage de température élevée ;
- une viscosité relativement faible de sorte à permettre une bonne mobilité des ions.

Actuellement, trois types d'électrolytes sont utilisés dans les supercondensateurs :
- les électrolytes aqueux, consistant en un ou des sels dissous dans l'eau ;
- les électrolytes organiques, consistant en un ou des sels dissous dans un solvant organique ;
- les liquides ioniques consistant en un sel liquide à température ambiante.

Concernant les électrolytes aqueux, qu'ils soient acides (par exemple, une solution d'acide sulfurique) ou basiques (par exemple, une solution de potasse), le domaine de tension nominale applicable, pour des raisons de décomposition de l'eau, est limité à environ 1 V, ce qui nécessite pour atteindre des tensions classiques (par exemple, 12 V) de procéder à des agencements complexes de plusieurs unités de supercondensateur. De plus, la plage de températures accessible est limitée du fait de la faible solubilité de certains sels en milieu aqueux, ce qui ne permet pas d'utiliser ces électrolytes à des températures inférieures à -20°C.

Concernant les électrolytes organiques, ils présentent une fenêtre de stabilité électrochimique plus grande que les électrolytes aqueux. Un solvant organique couramment utilisé, pour entrer dans la constitution de ces électrolytes, est l'acétonitrile. Ce solvant est peu visqueux, dissout très bien les sels et est très dissociant.

De plus :
- il est très stable, tant dans des conditions oxydantes que réductrices ;
- il a un moment dipolaire, qui permet la solvatation des ions ; et
- il présente à la fois un nombre donneur élevé et un nombre accepteur élevé, ce qui fait qu'il peut se comporter à la fois comme un acide et une base de Lewis.

Cependant, ces électrolytes sont peu rentables, car présentant un coût élevé et l'utilisation de certains solvants organiques, dont la tension de vapeur est élevée, pose un problème environnemental sérieux, du fait qu'ils peuvent être difficilement recyclables et peuvent s'évaporer dans l'atmosphère environnante lors de leur utilisation.

Les électrolytes peuvent être utilisés dans un large panel de domaines, tels que :
- le domaine de la production du cuir, où ils sont spécifiquement utilisés comme polyélectrolytes comme décrit dans US 2007/022541) ;
- le domaine du dépôt galvanique d'or ou d'alliages d'or comme décrit dans WO 2010/142437 ; et
- le domaine des batteries lithium-dioxyde de soufre comme décrit dans US 4 889 779.

Concernant les liquides ioniques, ils n'ont idéalement pas de tension de vapeur mesurable et présentent une grande stabilité thermique, ce qui induit que les problèmes environnementaux et de sécurité rencontrés avec les solvants organiques (que ce soit en termes de volatilité, d'évaporation et de risques d'inflammabilité ou d'explosion) sont éliminés avec eux.

Toutefois, les liquides ioniques peuvent présenter une viscosité importante et donc des conductivités ioniques faibles, ce qui entraîne des résistances élevées à température ambiante.

Des liquides ioniques ont notamment été décrits pour une utilisation dans la conception de matériaux hybrides comprenant une matrice poreuse de silice piégeant un liquide ionique, comme décrit dans Progress in Solid State Chemistry, vol. 33, n°2-4, pages 217-222.

Ainsi, que ce soient pour les électrolytes aqueux, les électrolytes organiques ou les liquides ioniques, il ressort toujours des inconvénients inhérents à la nature de ces électrolytes et il n'existe pas, à l'heure actuelle, d'électrolytes combinant à la fois des propriétés avantageuses en termes de stabilité électrochimique, conductivité ionique, stabilité à la température et viscosité.

Les auteurs se sont fixé ainsi pour but de proposer une composition répondant à ces spécificités.

### EXPOSÉ DE L'INVENTION

Ainsi, les auteurs de la présente invention ont mis au point des nouveaux liquides ioniques présentant à la fois :
- une faible viscosité, pouvant être de l'ordre de 3-4 mPa.s ;
- une grande stabilité électrochimique (avec un différentiel de potentiel pouvant aller jusqu'à 4 V) ;
- une grande stabilité thermique, par exemple, entre -50°C et +150°C ;
- une conductivité ionique élevée, par exemple, pouvant être supérieure à 20 mS/cm.

Ces liquides ioniques consistent en l'association innovante entre un cation phosphonium spécifique et un anion formiate.

On précise que, par liquide ionique, on entend des sels se présentant à l'état liquide, ces liquides ioniques pouvant être représentés par la formule générale suivante :

A⁺X⁻

dans laquelle :
*A⁺ représente un cation, qui est, dans ce cas de figure, un cation phosphonium spécifique ; et
*X⁻ représente un anion, généralement, qui est, dans ce cas, un anion formiate.

Le cation phosphonium est un cation comprenant un atome de phosphore chargé positivement lié, par covalence, à quatre groupes et/ou éléments chimiques, identiques ou différents.

Ce cation répond à la formule générale suivante : 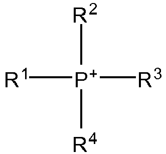 dans laquelle R¹, R², R³ représentent un groupe alkyle identique et R⁴ représente un un atome d'hydrogène.

On précise que, par groupe alkyle, on entend, classiquement, dans ce qui précède et ce qui suit, un groupe alkyle linéaire ou ramifié de formule -CₙH₂ₙ₊₁, n correspondant au nombre d'atomes de carbone, qui est, dans notre cas de figure, un nombre d'atomes de carbone allant de 1 à 12.

Avantageusement, R¹, R² et R³ peuvent représenter un groupe alkyle identique, qui est un groupe tert-butyle, et R⁴ représente un atome d'hydrogène, moyennant quoi le cation peut être représenté par la formule suivante : 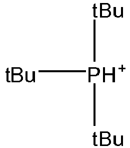 tBu étant l'abréviation désignant un groupe tert-butyle, ce cation étant communément désigné sous l'appellation de tri(tert-butyl)phosphonium.

L'anion formiate (pouvant être également nommé anion méthanoate) peut être représenté par la formule suivante :

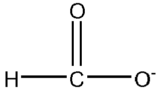

Ces liquides ioniques, qui peuvent être utilisés comme électrolytes, peuvent être préparés par une simple réaction acido-basique selon le mécanisme de BrØnsted.

Aux liquides ioniques peuvent être adjoints de l'eau, un solvant organique et/ou des acides organiques.

Ainsi, l'invention a également trait à une composition comprenant, outre un liquide ionique tel que défini ci-dessus, un ou plusieurs additifs choisis parmi l'eau, un solvant organique, un acide organique et des mélanges de ceux-ci.

Comme solvant organique, il peut s'agir d'un solvant polaire aprotique, qui peut être choisi, en particulier, parmi les solvants nitriles (c'est-à-dire les solvants comprenant au moins un groupe -CN), les solvants carbonates et les solvants lactones (c'est-à-dire les solvants comprenant au moins un groupe ester cyclique).

Lorsque le solvant est un solvant nitrile, il peut s'agir de l'acétonitrile de formule CH₃-CN.

L'acétonitrile est particulièrement avantageux et ce pour les raison suivantes :
- il est peu visqueux (sa viscosité étant de l'ordre de 0,32 mPa.s) ;
- il dissout très bien les sels, car il est très dissociant, ce qui rend les électrolytes comprenant de l'acétonitrile conducteurs à froid ;
- il est stable d'un point de vue électrochimique, tant dans des conditions oxydantes que réductrices ;
- il présente un moment dipolaire qui permet la solvatation des ions ;
- il présente un nombre donneur de Guttman élevé (de l'ordre de 14) et un nombre accepteur de Guttman également élevé (de l'ordre de 19), ce qui fait qu'il peut se comporter à la fois comme un accepteur et comme un donneur d'électrons.

Lorsque le solvant est un solvant carbonate, il peut s'agir du carbonate de propylène, du carbonate d'éthylène, du carbonate de diméthyle, de l'éthylméthylcarbonate (ou carbonate éthylique méthylique connu sous la dénomination « EMC »).

Lorsque le solvant est un solvant lactone, il peut s'agir de la γ-butyrolactone, de la β-butyrolactone, de la γ-valérolactone, de la δ-valérolactone et de la γ-caprolactone.

Comme acide organique, il peut s'agir d'un acide carboxylique, par exemple comprenant de 1 à 12 atomes de carbone, tel que l'acide formique.

Les compositions de l'invention peuvent être préparées par des procédés de préparation simples à la portée de l'homme du métier.

Ainsi, les compositions peuvent être préparées selon la séquence d'étapes suivantes :
- une étape de pesée de chacun des ingrédients constitutifs de la composition ;
- une étape de formation de la composition par mélange desdits ingrédients.

Les compositions de l'invention forment, du fait de la présence d'un liquide ionique, un mélange électrolytique, ce qui fait qu'elles sont particulièrement appropriées pour être utilisées comme électrolytes, ce qui est le cas aussi des liquides ioniques en tant que tels, dans un dispositif à stockage d'énergie, de préférence, du type supercondensateur.

L'invention a donc trait également à un dispositif à stockage d'énergie, par exemple, du type supercondensateur, comme illustré selon un mode de réalisation particulier sur la figure unique jointe en annexe, comprenant au moins une cellule 1 comprenant une électrode positive 3 et une électrode négative 5 séparées l'une de l'autre par un séparateur 7 comprenant, comme électrolyte, un liquide ionique ou une composition conforme à l'invention.

L'électrode positive et l'électrode négative peuvent être à base de carbone activé, auquel cas les supercondensateurs comprenant ce type d'électrodes peuvent être qualifiés de système symétrique.

L'électrode positive et l'électrode négative peuvent être également à base d'oxyde(s) métallique(s).

Le liquide ionique ou la composition conforme à l'invention forme au niveau de chaque interface électrode-séparateur une double couche électrochimique.

L'invention va à présent être décrite en référence aux exemples fournis ci-dessous donnés à titre illustratif et non limitatif.

### BRÈVE DESCRIPTION DES DESSINS

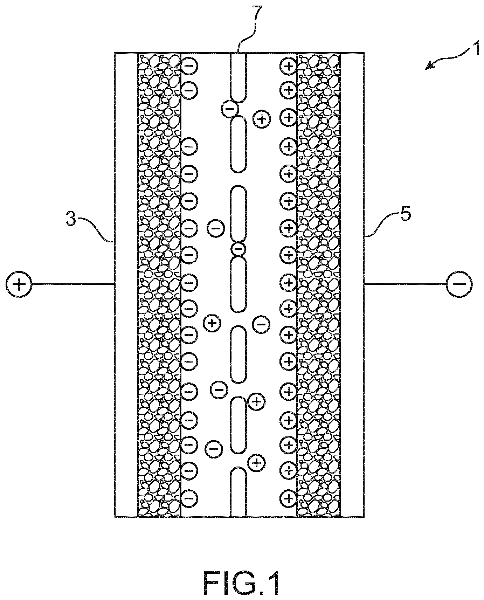

La figure 1 représente une cellule de supercondensateur conforme à l'invention.

Les figures 2 et 3 représentent des graphiques de voltampérométrie cyclique représentant l'évolution de la densité de courant j (en mA.cm⁻²) en fonction du potentiel E (en V par rapport à une électrode de référence Ag/AgCl) respectivement pour une vitesse de balayage de 100 mV/s et de 10 mV/s pour des compositions conformes à l'exemple 5 ci-dessous.

### EXPOSÉ DÉTAILLÉ DE MODES DE RÉALISATION PARTICULIERS

### EXEMPLE 1

Cet exemple illustre la préparation du liquide ionique protique résultant de l'association d'un cation tri(tert-butyl)phosphonium et d'un anion formiate, formé par transfert protonique entre un acide de BrØnsted (ici, l'acide formique) et une base de BrØnsted (ici, la tri(tert-butyl)phosphine).

Pour ce faire, on mélange 0,402 mole d'acide formique (98%) (m=18,91 g ; V=15,5 cm³) et 0,462 moles de tri(tert-butyl)phosphine (m=81,47 g ; V=100,5 cm³) à température ambiante sous agitation dans de l'acétate d'éthyle (50 mL).

Le mélange résultant est agité pendant 48 heures.

A l'issue de ces 48 heures, le mélange est évaporé sous vide à 80°C, de sorte à éliminer l'excès de tri(tert-butyl)phosphine et d'acide formique. Le liquide ionique ainsi obtenu est séché sous vide. Après séchage, l'analyse Karl-Fisher indique la présence de 1,6% d'eau résiduelle. Cette eau résiste à l'élimination, car elle forme un solvate avec le liquide ionique.

Le liquide ionique obtenu est donc pur à 98,4%. Il est transparent et ne présente pas d'odeur.

### EXEMPLE 2

Dans cet exemple, le liquide ionique préparé à l'exemple 1 est mélangé avec de l'acide formique (selon un rapport molaire 1/10, ce qui signifie que, pour 100 g de mélange, il y a 35g de liquide ionique et 65g d'acide formique). La composition obtenue est dénommée ci-après [TrBuPh][HCOO]/10HCOOH.

Il a été procédé à la mesure de la conductivité en fonction de la température.

Il en ressort que la conductivité augmente substantiellement en fonction de la température, celle-ci se chiffrant à 35 mS.cm⁻¹ à 25°C et à 47,9 mS.cm⁻¹ à 50°C. Ces valeurs de conductivité sont bien supérieures à celles classiquement rencontrées pour les liquides ioniques (qui sont généralement inférieures à 15 mS.cm⁻¹).

Il a également été procédé à la mesure de la conductivité de cette composition, en fonction de la teneur massique.

Pour ce faire, il a été ajouté différentes proportions massiques d'eau et pour chacune des compositions résultantes, on a mesuré la conductivité de la composition à 25°C.

On a constaté que la conductivité reste sensiblement constante pour des proportions massiques d'eau allant de 0 à 0,8.

### EXEMPLE 3

Dans cet exemple, le liquide ionique préparé à l'exemple 1 est mélangé avec de l'acide formique (selon un rapport molaire 1/10, ce qui signifie que, pour 100 g de mélange, il y a 35 g de liquide ionique et 65 g d'acide formique). La composition obtenue est dénommée ci-après [TrBuPh][HCOO]/10HCOOH.

Il est procédé à la mesure de la viscosité en fonction de la température.

Il ressort que celle-ci s'élève à 3,7 cP à 25°C et à 2,5 cP à 50°C, ces valeurs étant plus faibles que celles des liquides ioniques actuellement étudiés dans la littérature (les valeurs pour ces liquides s'élevant autour de 80 cP à 20°C).

### EXEMPLE 4

Dans cet exemple, le liquide ionique préparé à l'exemple 1 est soumis à une analyse thermique réalisée par calorimétrie différentielle programmée (intitulée également « DSC »).

Pour ce faire, un échantillon de 11 mg du liquide ionique est soumis, sous atmosphère d'azote à deux cycles comportant une montée en température de 25°C à 350°C à raison de 10°C/min et un refroidissement de 350°C à 25°C à raison également de 10°C/min.

Il résulte de cette analyse que le liquide ionique est stable entre 25°C et 350°C.

### EXEMPLE 5

Dans cet exemple, le liquide ionique préparé à l'exemple 1 est mélangé avec de l'acide formique (selon un rapport molaire 1/10, ce qui signifie que, pour 100 g de mélange, il y a 35 g de liquide ionique et 65 g d'acide formique). La composition obtenue est dénommée ci-après [TrBuPh][HCOO]/10HCOOH.

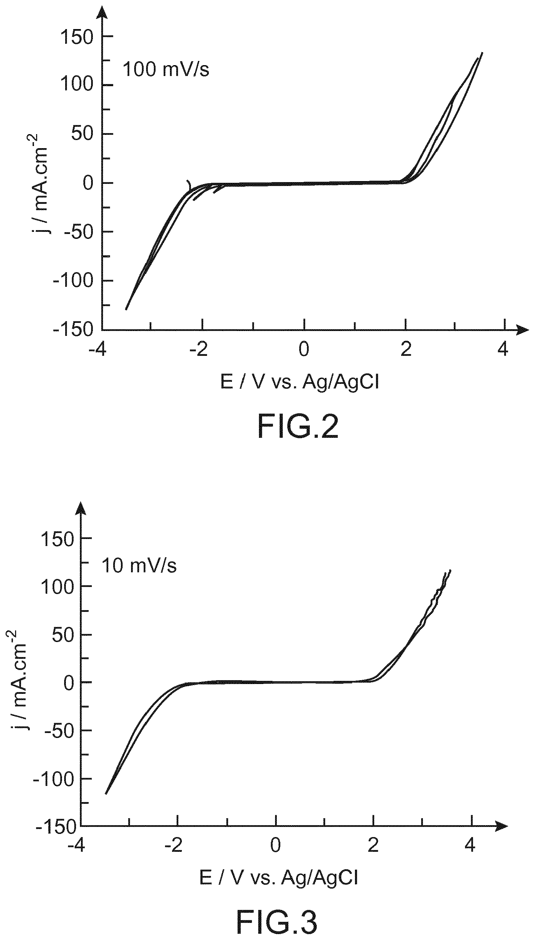

La composition résultante est soumise à des essais de voltampérométrie cyclique par la méthode aux trois électrodes à température ambiante et à différentes vitesses de balayage (une série d'essais à 100 mV/s pour la figure 2 et une série d'essais à 10 mV/s pour la figure 3).

Il ressort, comme visible sur les figures 2 et 3 représentant la densité de courant j (en mA.cm⁻²) en fonction du potentiel E (en V), que la composition résultante présente une stabilité électrochimique sur une fenêtre de 4 V, et plus précisément de -2V à +2V exprimé par rapport à une électrode de référence Ag/AgCl.

### EXEMPLE 6

Dans cet exemple, trois compositions ont été mises au point :
- une première composition résultant du mélange du liquide ionique préparé à l'exemple 1 avec de l'acide formique (selon un rapport molaire 1/10, ce qui signifie que, pour 100 g de mélange, il y a 35 g de liquide ionique et 65 g d'acide formique), La composition obtenue est dénommée ci-après [TrBuPh][HCOO]/10HCOOH ;
- une deuxième composition résultant du mélange de la première composition susmentionnée avec de l'acétonitrile (pour 100 g de mélange, 50 g de la première composition et 50 g d'acétonitrile);
- une troisième composition résultant du mélange de la première composition susmentionnée avec de l'eau (pour 100 g de mélange, 50 g de la première composition et 50 g d'eau).

Ces trois compositions sont soumises à des essais de voltampérométrie cyclique sur carbone activé dans des conditions standards de vitesse de balayage (à savoir 20 mV/s) .

Il en est déduit les valeurs respectives de capacité suivante :
- C=150 F/g pour la première composition ;
- C=200 F/g pour la deuxième composition ; et
- C=160 F/g pour la troisième composition.

Les capacités maximales théoriques sont atteintes dans tous les cas de figure.

Il a été procédé aux mêmes essais avec un électrolyte aqueux comprenant de l'eau et du K₂SO₄ (1 mol.L⁻¹) et un électrolyte organique (un mélange carbone d'éthyle et carbonate de diméthyle et du LiTFSI (1 mol.L⁻¹) (TFSI signifiant (trifluorométhanesulfonyl)imide).

Il en ressort que l'utilisation des compositions conformes à l'invention permet d'améliorer le comportement capacitif des cellules dans lesquelles elles sont incluses.

### EXEMPLE 7

Dans cet exemple, trois compositions ont été mises au point :
- une première composition résultant du mélange du liquide ionique préparé à l'exemple 1 avec de l'acide formique (selon un rapport molaire 1/10, ce qui signifie que, pour 100 g de mélange, il y a 35 g de liquide ionique et 65 g d'acide formique), La composition obtenue est dénommée ci-après [TrBuPh][HCOO]/10HCOOH ;
- une deuxième composition résultant du mélange de la première composition susmentionnée avec de l'acétonitrile (pour 100 g de mélange, 50 g de la première composition et 50 g d'acétonitrile) ;
- une troisième composition résultant du mélange de la première composition susmentionnée avec de l'eau (pour 100 g de mélange, 50 g de la première composition et 50 g d'eau).

Ces trois compositions sont soumises à des essais de voltampérométrie cyclique sur carbone activé dans des conditions de vitesse de balayage élevée (à savoir 100 mV/s).

Il en est déduit les valeurs respectives de capacité suivante :
- C=180 F/g pour la première composition ;
- C=180 F/g pour la deuxième composition ; et
- C=268 F/g pour la troisième composition.

Il en est déduit que l'utilisation de compositions conformes à l'invention autorise de fortes densités de courant appliquées (par exemple, de 40 A/g à 60 A/g). Elles présentent toutes les caractéristiques nécessaires pour des applications demandant à la fois de fortes densités d'énergie et de puissance.

### EXEMPLE 8

Dans cet exemple, le liquide ionique préparé à l'exemple 1 est mélangé avec de l'acide formique (selon un rapport molaire 1/10, ce qui signifie que, pour 100 g de mélange, il y a 35g de liquide ionique et 65g d'acide formique). La composition obtenue est dénommée ci-après [TrBuPh][HCOO]/10HCOOH.

La composition résultante est soumise à des essais de voltampérométrie cyclique sur électrode de carbone activé avec une vitesse de balayage de 5 mV/s à différentes températures (25°C, 80°C et -40°C).

Il en est déduit les valeurs respectives de capacité suivante :
- C=150 F/g pour une température de 25°C ;
- C=155 F/g pour une température de 80°C; et
- C=150 F/g pour une température de -40°C.

Au vu des valeurs de capacité sensiblement équivalentes, il s'ensuit que la composition conforme à l'invention présente un comportement capacitif stable sur une large gamme de températures (telle qu'entre -40 et 80°C).

## Revendications

1. Liquide ionique comprenant, comme cation, un cation phosphonium et, comme anion, un anion formiate, lequel cation phosphonium répond à la formule générale suivante : 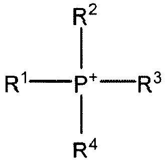 **caractérisé en ce que** R¹, R², R³ représentent un groupe alkyle identique comprenant de 1 à 12 atomes de carbone et R⁴ représente un atome d'hydrogène.

2. Liquide ionique selon la revendication 1, **caractérisé en ce que** R¹, R² et R³ représentent un groupe tert-butyle.

3. Liquide ionique selon la revendication 1 ou 2, qui est un électrolyte.

4. Composition comprenant un liquide ionique tel que défini selon l'une quelconque des revendications 1 à 3 et, **caractérisée en ce qu'**elle comprend, un ou plusieurs additifs choisis parmi l'eau, un solvant organique, un acide organique et des mélanges de ceux-ci.

5. Composition selon la revendication 4, **caractérisée en ce que** le solvant organique est un solvant polaire aprotique.

6. Composition selon la revendication 4 ou 5, **caractérisée en ce que** le solvant organique est choisi parmi les solvants nitriles, les solvants carbonates et les solvants lactones.

7. Composition selon l'une quelconque des revendications 4 à 6, **caractérisée en ce que** le solvant organique est l'acétonitrile.

8. Composition selon l'une quelconque des revendications 4 à 7, **caractérisée en ce que** l'acide organique est un acide carboxylique.

9. Composition selon la revendication 8, **caractérisée en ce que** l'acide carboxylique est l'acide formique.

10. Composition selon l'une quelconque des revendications 4 à 9, qui est un électrolyte.

11. Dispositif à stockage d'énergie comprenant au moins une cellule comprenant une électrode positive et une électrode négative séparées l'une de l'autre par un séparateur **caractérisé en ce qu'**il comprend comme électrolyte, un liquide ionique tel que défini selon l'une quelconque des revendications 1 à 3 ou une composition telle que définie selon l'une quelconque des revendications 4 à 10.

12. Dispositif à stockage d'énergie selon la revendication 11, qui est un supercondensateur.

## Patentansprüche

1. Ionische Flüssigkeit, welche als Kation ein Phosphoniumkation und als Anion ein Formiatanion umfasst, wobei das Phosphoniumkation die folgende allgemeine Formel aufweist: 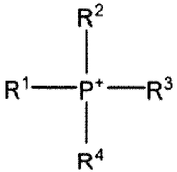 **dadurch gekennzeichnet, dass** R¹, R², R³ für eine identische Alkylgruppe stehen, welche 1 bis 12 Kohlenstoffatome umfasst und R⁴ für ein Wasserstoffatom steht.

2. Ionische Flüssigkeit nach Anspruch 1, **dadurch gekennzeichnet, dass** R¹, R² und R³ für eine tert-Butylgruppe stehen.

3. Ionische Flüssigkeit nach Anspruch 1 oder 2, welche ein Elektrolyt ist.

4. Zusammensetzung, welche eine ionische Flüssigkeit wie in den Ansprüchen 1 bis 3 definiert umfasst und **dadurch gekennzeichnet ist, dass** sie einen oder mehrere Zusätze umfasst, die gewählt sind aus Wasser, einem organischen Lösungmittel, einer organischen Säure und deren Mischungen.

5. Zusammensetzung nach Anspruch 4, **dadurch gekennzeichnet, dass** das organische Lösungsmittel ein polares aprotisches Lösungsmittel ist.

6. Zusammensetzung nach Anspruch 4 oder 5, **dadurch gekennzeichnet, dass** das organische Lösungsmittel gewählt ist aus Nitril-Lösungsmitteln, Carbonat-Lösungsmitteln und Lacton-Lösungsmitteln.

7. Zusammensetzung nach einem der Ansprüche 4 bis 6, **dadurch gekennzeichnet, dass** das organische Lösungsmittel Acetonitril ist.

8. Zusammensetzung nach einem der Ansprüche 4 bis 7, **dadurch gekennzeichnet, dass** die organische Säure eine Carboxylsäure ist.

9. Zusammensetzung nach Anspruch 8, **dadurch gekennzeichnet, dass** die Caboxylsäure Ameisensäure ist.

10. Zusammensetzung nach einem der Ansprüche 4 bis 9, welche ein Elektrolyt ist.

11. Energiespeichervorrichtung, welche wenigstens eine Zelle umfasst, die eine positive Elektrode und eine negative Elektrode aufweist, die voneinander durch einen Separator getrennt sind, **dadurch gekennzeichnet, dass** sie als Elektrolyt eine ionische Flüssigkeit wie in den Ansprüchen 1 bis 3 definiert oder eine Zusammensetzung wie in den Ansprüchen 4 bis 10 definiert umfasst.

12. Energiespeichervorrichtung nach Anspruch 11, welche ein Superkondensator ist.

## Claims

1. Ionic liquid comprising, as cation, a phosphonium cation and, as anion, a formiate anion, which phosphonium cation satisfies the following generic formula: 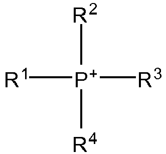 **characterized in that** R¹, R², R³ represent an identical alkyl group comprising from 1 to 12 carbon atoms and R⁴ represents a hydrogen atom.

2. Ionic liquid according to claim 1, in **characterized in that** R¹, R² and R³ represent a *tert-*butyl group.

3. Ionic liquid according to claim 1, which is an electrolyte.

4. Composition comprising an ionic liquid as defined according to any of claims 1 to 3 and, **characterized in that** it comprises one or more additives selected from water, an organic solvent, an organic acid and mixtures thereof.

5. Composition according to claim 4, **characterized in that** the organic solvent is an aprotic polar solvent.

6. Composition according to claim 4 or 5, **characterized in that** the organic solvent is selected from nitrile solvents, carbonate solvents and lactone solvents.

7. Composition according to any of claims 4 to 6, **characterized in that** the organic solvent is acetonitrile.

8. Composition according to any of claims 4 to 7, **characterized in that** the organic acid is a carboxylic acid.

9. Composition according to claim 8, **characterized in that** the carboxylic acid is formic acid.

10. Composition according to any of claims 4 to 9, which is an electrolyte.

11. Energy storage device comprising at least one cell comprising a positive electrode and a negative electrode separated from each other by a separator **characterized in that** it comprises, as electrolyte, an ionic liquid as defined according to any of claims 1 to 3 or a composition as defined according to any of claims 4 to 10.

12. Energy storage device according to claim 11, which is a supercapacitor.
